# EUROPEAN PATENT APPLICATION

(11) **EP 1 657 638 A1**
(43) Date of publication of application: **17.05.2006**
(21) Application number: 04257038.2
(22) Date of filing: 12.11.2004
(51) Int. Cl.: G06F 9/445

(54) **System and method for downloading a program from a program store location to a mobile device**

(71) Applicant: Research In Motion Limited, Waterloo, Ontario N2L 3W8 (CA)
(72) Inventor: Bocking, Andrew D., N2K 3Y8 Ontario (CA); Tyhurst, Tim R., N2M 2W5 Ontario (CA); Landry, Paul, L7L 6G1 Ontario (CA)
(74) Representative: Roberts, Gwilym Vaughan

(57) **Abstract**

A system includes a central program store location having a memory storing a plurality of application programs and a plurality of identifiers. Each of at least some of the identifiers are associated with at least one of the programs. A communication network, such as the Internet, connects the program store location and the host system. A communication channel connects the host system and a target system. A loader routine is adapted to execute at the host system, communicate with the program store location through the Internet, communicate with the target system through the communication channel and receive an identifier as a received identifier. The loader routine employs the identifiers from the program store location and the received identifier to select one program for download from the program store location to the host system. The loader routine then downloads the selected program from the host system to the target system.

## Description

### CROSS REFERENCE TO RELATED APPLICATION

This application is related to commonly assigned, concurrently filed:
United States Patent Application Serial No. 10/786,823, filed February 25, 2004, entitled "Method And System For Selecting A Program For Download".

### BACKGROUND OF THE INVENTION

### Field of the Invention

The invention pertains generally to downloading a program from a program store location to a host system and to a target system and, more particularly, to a method for selecting a program for downloading. The invention also relates to a method of enabling download of a program from a program store location for a destination system. The invention also relates to a system for downloading a program from a program store location to a host system and to a target system.

### Background Information

It is known to bundle various versions of handheld electronic device software code with desktop software code inside a single monolithic installer. As a result, the decision of what handheld software modules are to be included has to be made at the time the monolithic installer is built. This requires that the desktop software must be redeployed each time that any handheld electronic device software code update is required for any supported handheld electronic device. Hence, there is a relatively large count of monolithic installer variants, one for each possible combination of supported desktop/handheld electronic devices. Therefore, with increasing numbers of different handheld electronic device models, the building of the monolithic installer is increasingly unsustainable.

For wireless handheld electronic devices that are supported by a variety of wireless *(e.g.,* without limitation, 2.5G; 3G) vendors *(e.g.,* service providers or carriers), there has been a distinct requirement from those vendors to specifically test handheld electronic device software from a network-specific standpoint as well as some application-level functionality. There is also the variability of launch timelines that differ from vendor to vendor. This inserts variability into the specific software version that a vendor will launch with. For example, a vendor may go with the best available software version that, also, fits into the vendor's launch timelines.

As a result, different vendors will have "approved" different versions of handheld electronic device software for a particular handheld model at any given time. Hence, a first vendor may approve one version of software, a second vendor may approve another version of software, and a third vendor may approve still another version of software.

For example, this creates problems for an information technology (IT) department of an enterprise that desires to manage a single software load *(e.g.,* from a personal computer (PC) or workstation), in order to support and maintain assets such as laptops, PDAs and other wireless handheld electronic devices. Typically, that department asks the critical question "What CD should I push out to my internal user community? The one from vendor A or vendor B or vendor C?" Hence, given the growing complexity of handheld electronic devices, such as "smartphones" and "wireless converged handhelds," this phenomenon of various different handheld software versions for various different vendors will not be going away. Furthermore, the job to upgrade the wireless converged handheld electronic device software (with the appropriate corporate approved versions as well as the carrier-specific versions as appropriate) in an organized fashion is something strongly desired by this community without requiring PC software to be installed and maintained on users' workstations. Accordingly, there is room for improvement in methods and systems for downloading a program or for enabling download of a program.

### SUMMARY OF THE INVENTION

These needs and others are met by the invention, which employs an identifier, such as a vendor identifier and a hardware identifier, in a target system, stores a plurality of identifiers at a program store location, and associates the identifiers with programs. The identifier is sent from the target system to a host system. The host system employs the identifiers from the program store location and the sent identifier to select one of the programs and downloads the selected program from the program store location to the host system. The host system also downloads the selected program from the host system to the target system.

In accordance with one aspect of the invention, a method of downloading a program from a program store location to a host system and to a target system comprises: storing a plurality of programs at the program store location; storing a plurality of identifiers at the program store location, with each of at least some of the identifiers being associated with at least one of the programs; connecting the program store location and the host system by a communication network; connecting the host system and the target system by a communication channel; sending an identifier from the target system to the host system over the communication channel; receiving the identifier as a received identifier at the host system; employing the identifiers and the received identifier to select one of the at least one of the programs for download as a selected program from the program store location to the host system; and downloading the selected program from the host system to the target system.

As another aspect of the invention, a system for downloading a program comprises: a program store location including a memory storing a plurality of programs, the memory also storing a plurality of identifiers, with each of at least some of the identifiers being associated with at least one of the programs; a host system; a target system including an identifier; a communication network connecting the program store location and the host system; a communication channel connecting the host system and the target system; and a loader routine adapted to execute at the host system, communicate with the program store location through the communication network, communicate with the target system through the communication channel, receive the identifier as a received identifier from the target system over the communication channel, employ the identifiers from the program store location and the received identifier to select one of the at least one of the programs for download as a selected program from the program store location to the host system, and download the selected program from the host system to the target system.

The loader routine may be an application loader that is activated at the host system responsive to a link in an e-mail message sent to the host system.

The program store location may be a central program store location, and the host system and the target system may be remote from the central program store location.

The loader routine may be an application loader that is activated at the host system responsive to a link of a web site associated with the central program store location.

The loader routine may be further adapted to download and store the selected program as a stored program at the host system before downloading the stored program from the host system to the target system.

As another aspect of the invention, a method of enabling download of a program from a program store location for a destination system comprises: storing a plurality of programs at the program store location; storing a plurality of identifiers at the program store location, with each of at least some of the identifiers being associated with at least one of the programs; storing a program loader at the program store location; adapting the program loader to execute at the destination system, communicate with the program store location through a communication network, receive an identifier as a received identifier from a target system, employ the identifiers from the program store location and the received identifier to select one of the at least one of the programs for download as a selected program from the program store location to the destination system, and download the selected program from the destination system to the target system; and enabling communication of the program loader from the program store location to the destination system over the communication network.

### BRIEF DESCRIPTION OF THE DRAWINGS

A full understanding of the invention can be gained from the following description of the preferred embodiments when read in conjunction with the accompanying drawings in which:
Figure 1 is a flowchart of steps for selecting a program for download from a program store location to a host system and to a target system in accordance with an embodiment of the invention.
Figure 2 is a block diagram of a system for selecting a program for download from a program store location to a host system and to a target system in accordance with another embodiment of the invention.
Figure 3 is a block diagram of a system for selecting an application program for download from a central program store location to a personal computer and to a wireless handheld electronic device in accordance with another embodiment of the invention.
Figure 4 is a block diagram showing communications by the central program store location, the personal computer and the wireless handheld electronic device of Figure 3.
Figure 5 is a flowchart of the application loader of Figure 3.
Figure 6 is a block diagram showing an update of the file of Figure 3.
Figures 7 and 8 are representations of displays employed by an application loader wizard associated with the personal computer of Figure 3.
Figure 9 is a representation of a display employed by a handheld manager associated with the personal computer of Figure 3.

### DESCRIPTION OF THE PREFERRED EMBODIMENTS

As employed herein, the term "host system" shall expressly include, but not be limited by, a workstation, a personal computer, a desktop system, a server, and a wide range of devices or destinations for receiving a downloaded program from a program store location.

As employed herein, the term "target system" shall expressly include, but not be limited by, a mobile electronic device, a handheld electronic device, a wireless handheld electronic device, and a wide range of devices or destinations for receiving a downloaded program from a host system.

As employed herein, the term "program store location" shall expressly include, but not be limited by, a workstation, a personal computer, a server, an HTTP server, a web server, a central program store location, a shared network location, and a wide range of sources for downloading or enabling download of a program to a host system.

As employed herein, the term "communication network" shall expressly include, but not be limited by, a wide area network (WAN), a local area network (LAN), a personal area network (PAN), a wireless network (e.g., without limitation, WWAN; WLAN; WPAN; a wireless metropolitan area network (WMAN)), an intranet, an extranet, a global communication network, and/or the Internet.

As employed herein, the term "communication channel" shall expressly include, but not be limited by, a communication network, a point-to-point communication link, and a wide range of communication mechanisms between a host system and a target system.

The invention is disclosed in connection with downloading or enabling download of an application program from a central program store location to a personal computer and, then, to a wireless handheld electronic device, although the invention is applicable to downloading or enabling download of a program from a wide range of program store locations to a wide range of destination systems, such as a wide range of host systems and a wide range of target systems.

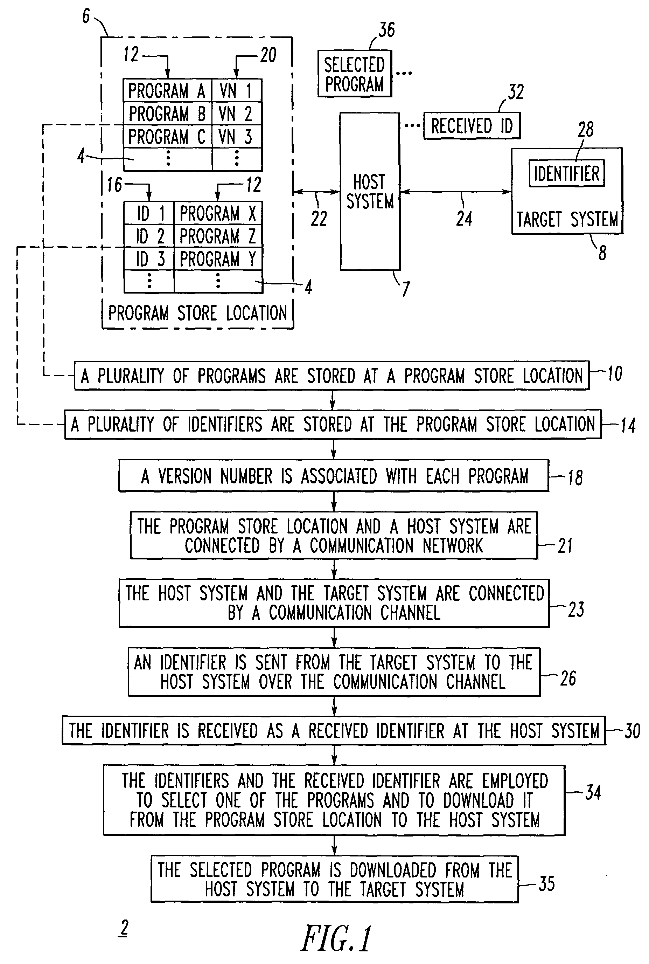

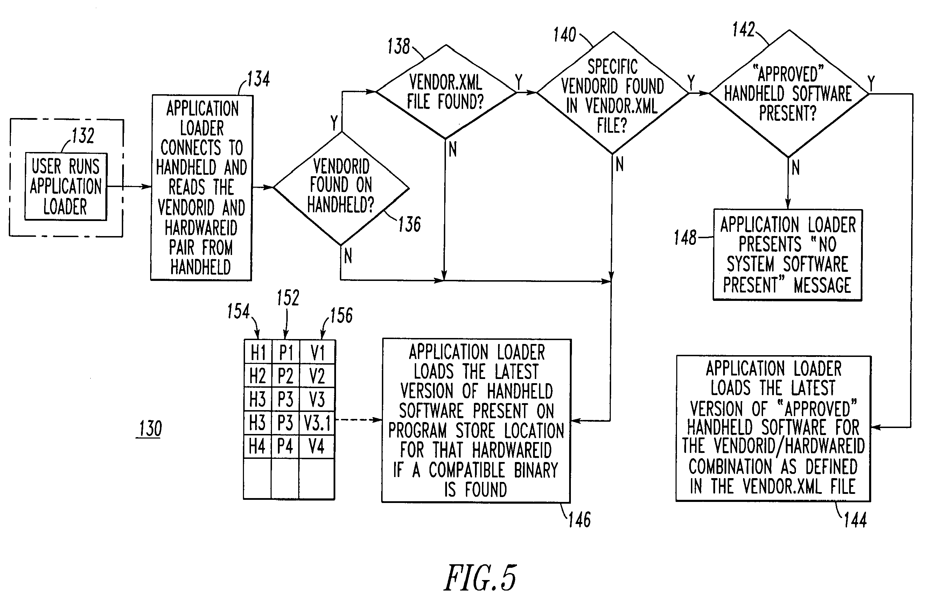

Referring to Figure 1, a flowchart 2 includes steps for selecting a program 4 for download from a program store location 6 to a host system 7 (e.g., a personal computer (PC)) and to a target system 8 (e.g., a handheld electronic device). At 10, a plurality of programs 12 (e.g., programs A-C; programs X-Z) are stored at the program store location 6. Next, at 14, a plurality of identifiers 16 (e.g., ID1; ID2; ID3) are stored at the program store location 6, with each of at least some of the identifiers 16 being associated with one or more of the programs 12. At 18, a version number 20 (e.g., VN1; VN2; VN3) is preferably associated with each of the programs 12. At 21, the program store location 6 and the host system 7 are connected by a communication network 22. At 23, the host system 7 and the target system 8 are connected by a communication channel 24. At 26, an identifier 28 is sent from the target system 8 to the host system 7 over the communication channel 24. Next, at 30, the identifier 28 is received as a received identifier 32 at the host system 7. Then, at 34, the identifiers 16 and the received identifier 32 are employed to select one of the at least one of the programs 12, such as program 4, and to download the same from the program store location 6 to the host system 7. Alternatively, as is discussed below in connection with Figure 5, it is possible that no program might be found that meets the requirements of the received identifier 32 and, hence, no selection is made. Finally, at 35, the selected program 36 is downloaded from the host system 7 to the target system 8.

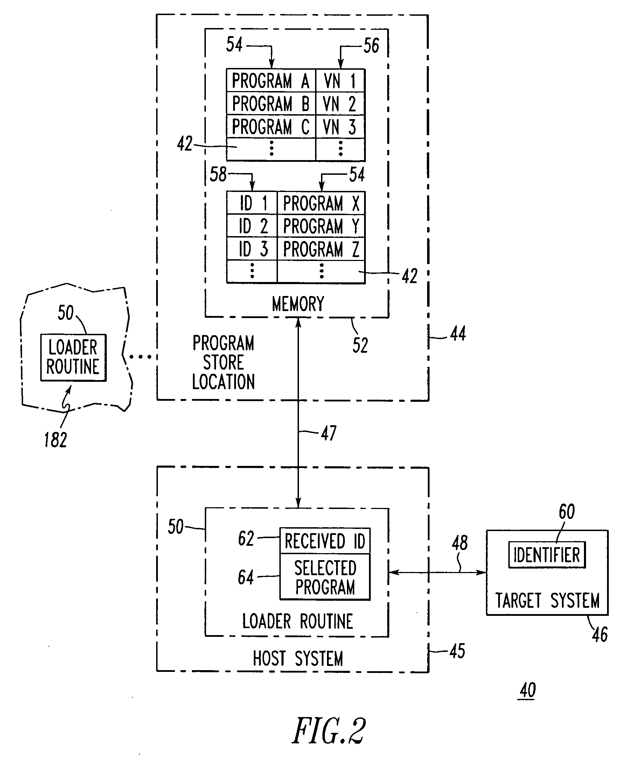

Figure 2 shows a system 40 for selecting a program 42 for download from a program store location 44 to a host system 45 and, then, to a target system 46. The system 40 includes the program store location 44, the host system 45, the target system 46, a communication network 47 connecting the program store location 44 and the host system 45, a communication channel 48 connecting the host system 45 and the target system 46, and a loader routine 50 adapted to execute at the host system 45. The program store location 44 includes a memory 52 storing a plurality of programs 54, with a version number 56 preferably being associated with each of the programs. The memory 52 also stores a plurality of identifiers 58, with each of at least some of the identifiers being associated with one or more of the programs 54. The target system 46 includes an identifier 60. The loader routine 50, which may be stored and downloaded to the host system 45 from the program store location 44 over the communication network 47, is adapted to execute at the host system 45, communicate with the program store location 44 through the communication network 47, communicate with the target system 46 through the communication channel 48, receive the identifier 60 as a received identifier 62 from the target system 46 over the communication channel 48, employ the identifiers 58 from the program store location 44 and the received identifier 62 to select one of the one or more programs 54, such as program 42, for download as a selected program 64 from the program store location 44 to the host system 45, and download the selected program 64 from the host system 45 to the target system 46.

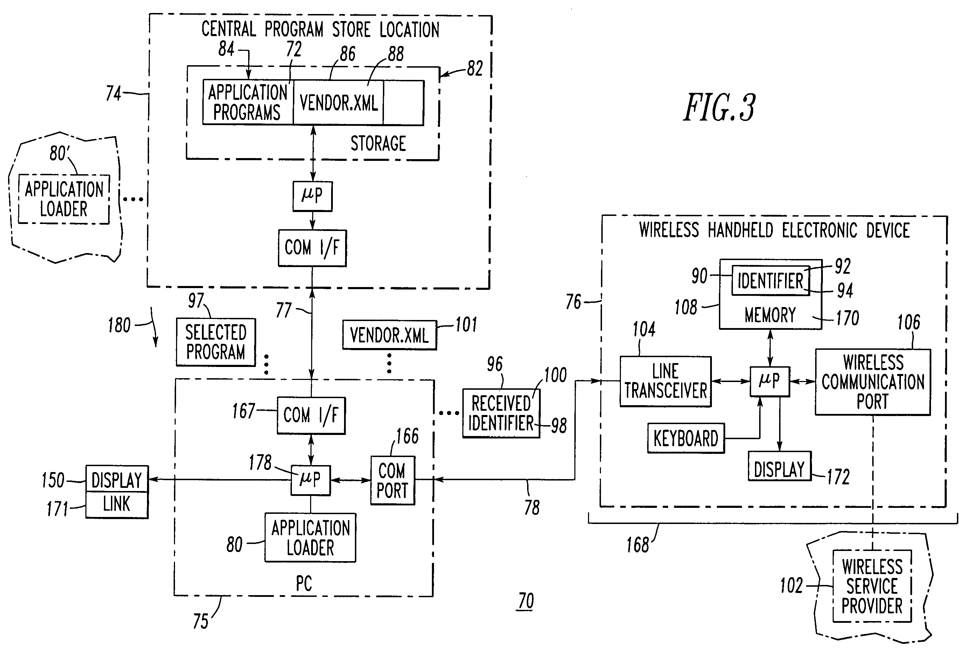

Figure 3 shows a system 70 for selecting a program 72 for download from a central program store location 74 to a personal computer (PC) 75 and to a mobile device, such as a wireless handheld electronic device 76. The system 70 includes the central program store location 74, the PC 75, the wireless handheld electronic device 76, a suitable communication network, such as the Internet 77, which connects the central program store location 74 and the PC 75, a suitable communication channel, such as a USB channel or an RS-232 cable 78, which connects the PC 75 and the wireless handheld electronic device 76, and an application loader routine 80 adapted to execute at the PC 75. The central program store location 74 includes a disk sub-system 82 storing a plurality of application programs 84 and a vendor.xml file 86 including a plurality of vendor identifiers 88, with each of at least some of these vendor identifiers 88 being associated with one or more of the application programs 84. The central program store location 74 may also store a remote copy, such as 80', of the application loader routine 80. The device 76 includes an identifier 90, which has a vendor identifier 92 and a hardware identifier 94. The application loader routine 80, which may be stored and downloaded to the PC 75 from the central program store location 74 over the Internet 77, is adapted to execute at the PC 75, communicate with the central program store location 74 through the Internet 77, communicate with the device 76 through the cable 78, receive the identifier 90 as a received identifier 96 from the device 76 over the cable 78, employ the identifiers 88 from the central program store location 74 and the received identifier 96 (e.g., including the received vendor identifier 98 and the received hardware identifier 100) to select one of the one or more application programs 84, such as program 72, for download as a selected program 97 from the central program store location 74 to the PC 75, and to download the selected program 97 from the PC 75 to the device 76.

The vendor identifier 92 is associated with a wireless communication vendor, such as wireless service provider 102 (shown in phantom line drawing). The device 76 includes a first wired communication port 104 adapted to communicate through the cable 78 and a second wireless communication port 106 adapted to communicate with the wireless communication vendor 102. Although an example target system, such as the wireless handheld electronic device 76 is shown, a wide range of target systems may be employed. Although an example host system, such as the PC 75 is shown, a wide range of host systems may be employed.

For ease of repeated access by the PC 75, the vendor.xml file 86 is preferably downloaded from the central program store location 74 over the Internet 77 and stored at the PC 75 as vendor.xml file 101.

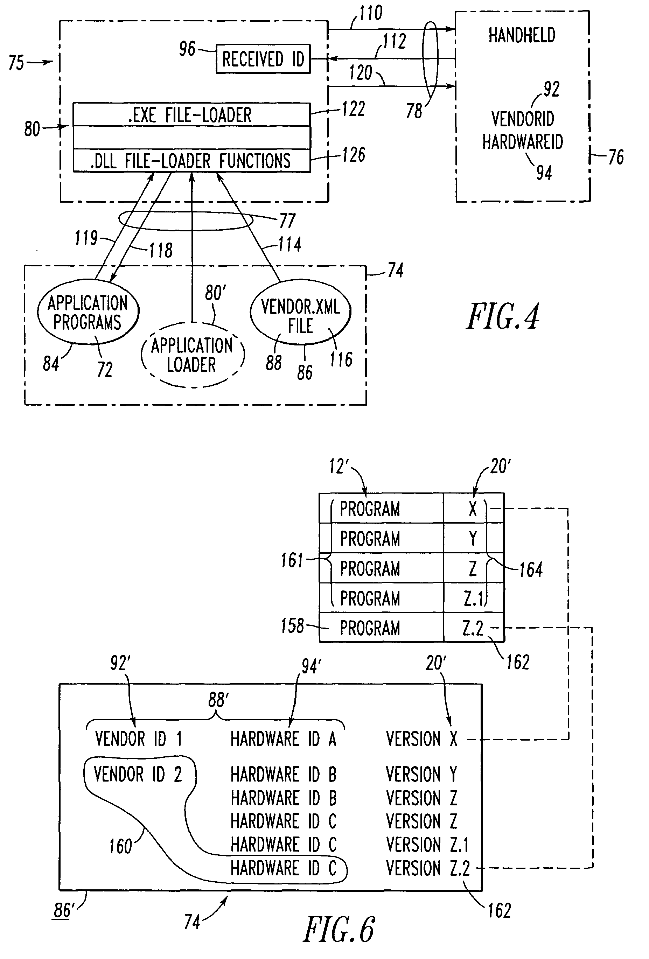

Referring to Figure 4, the communications by the PC application loader 80 and the wireless handheld electronic device 76 of Figure 3 are shown. Again, the central program store location 74 may store the remote copy, such as 80', of the application loader routine 80. First, at 110, the application loader 80 connects to the device 76 through port 166 (Figure 3) and the cable 78 and requests the vendor identifier (VendorID) 92 and the hardware identifier (HardwareID) 94. Next, at 112, the device 76 sends the vendor identifier 92 and the hardware identifier 94 through the cable 78 and the port 166 (Figure 3) to the application loader 80, which reads the received identifier 96 that includes the pair of identifiers 92,94 (Figure 3). Then, at 114, the application loader 80 through interface 167 (Figure 3) and the Internet 77 downloads the vendor.xml file 86 and determines whether the received identifier 96 (that includes the pair of identifiers 98,100) matches one of the identifiers 88 in the file 86 or the downloaded file 101 (Figure 3) and, if so, responsively selects one of the application programs 84 by obtaining a version number 116 from the downloaded file 101 based upon that received identifier 96. Next, at 118, based upon the version number 116, the application loader 80 selects one of the application programs 84, such as 72. If the appropriate binary application program 72 was available, then, at 119, the application loader 80 downloads that selected application program 72 as program 97 from the central program store location 74 to the PC 75 (Figure 3). Finally, at 120, the application loader 80 downloads that selected application program 97 to the handheld electronic device 76.

The example application loader 80 includes an executable loader file 122 and a dynamic link library file 126 that encapsulates functionality employed to communicate with legacy models of the device 76, but is not used for relatively newer models that support the concept of the vendor identifier 92.

Examples of the handheld electronic device 76 are disclosed in U.S. Patent Nos. 6,452,588; and 6,489,950, which are incorporated by reference herein.

The vendor.xml file 86 of the Appendix, below, is referenced in connection with Examples 1-3, below.

### Example 1

As one example, the received identifier 96 of Figure 4 may include the value 0x82 (e.g., 82H) as the vendor identifier 92 and the value 0x80000403 (e.g., 80000403H) as the hardware identifier 94. First, the application loader 80 performs a text search of the local file 101 looking for "vendor id="0x82"". As shown on the twelfth line (page 29) of the Appendix, that search is successful. Here, the particular vendor id of 0x82 is associated with a corresponding vendor, Swisscom. Then, the application loader 80 performs a text search of the file 101 (after that twelfth line) looking for "<devicehwid> followed by "0x80000403" before reaching "</vendor>". As shown on the fourteenth line (page 29) of the Appendix, that search is also successful. Next, the application loader 80 performs a text search of the file 101 (after that fourteenth line) looking for any other instance of "<devicehwid> followed by "0x80000403" before reaching "</vendor>". Here, there is none. Then, the application loader 80 performs a text search of the file 101 looking for "version=" prior to the sole relevant instance of "<devicehwid>. As shown on the thirteenth line (page 29) of the Appendix, that search is also successful. Next, the application loader 80 reads the version number as "3.6.0.38". With this information, the application loader 80 determines that the received identifier 96 matches one of the identifiers (e.g., vendor id = 0x82 and hardware id = 0x80000403) in the file 101 and responsively selects the corresponding one of the application programs 84 of the central program store location 74 based upon the version number "3.6.0.38". Finally, the application loader 80 downloads that selected one of the application programs 84 to the PC 75 and, then, to the handheld electronic device 76.

### Example 2

In this example, the received identifier 96 may only include the vendor identifier 92, or, if the hardware identifier 94 is included, that value is ignored by the application loader 80. Here, similar to Example 1, the received identifier 96 may include the value 0x82 (e.g., 82H) as the vendor identifier 92. First, the application loader 80 performs a text search of the local file 101 looking for "vendor id="0x82"". As shown on the twelfth line (page 29) of the Appendix, that search is successful. Here, the particular vendor id of 0x82 is associated with a corresponding vendor, Swisscom. Then, the application loader 80 performs a text search of the file 101 (after that twelfth line) looking for "version=" prior to the instance of "</vendor>. As shown on the thirteenth line of the Appendix, that search is also successful. Next, the application loader 80 reads the version number as "3.6.0.38". With this information, the application loader 80 determines that the received identifier 96 matches one of the identifiers (e.g., vendor id = 0x82) in the file 101 and responsively selects the corresponding one of the application programs 84 of the central program store location 74 based upon the version number "3.6.0.38". Finally, the application loader 80 downloads that selected one of the application programs 84 to the PC 75 and, then, to the handheld electronic device 76.

### Example 3

In this example, the received identifier 96 includes both the vendor identifier 92 and the hardware identifier 94, and the local file 101 (like the file 86) includes a plurality of instances of the particular value of the hardware identifier 94 for the particular value of the vendor identifier 92. For example, referring to page 26, lines 7-26 of the Appendix, there are four different version numbers (3.6.0.38; 3.6.0.59, 3.6.0.73; and 3.6.0.83) associated with the particular value 0x80000403 of the hardware identifier 94 for the particular value 0x78 of the vendor identifier 92.

Here, the received identifier 96 includes the value 0x78 (e.g., 78H) as the vendor identifier 92 and the value 0x80000403 (e.g., 80000403H) as the hardware identifier 94. First, the application loader 80 performs a text search of the file 101 looking for "vendor id="0x78"". As shown on the seventh line (page 26) of the Appendix, that search is successful. Here, the particular vendor id of 0x78 is associated with a corresponding vendor, VODAFONE (UK). Then, the application loader 80 performs a text search of the file 101 looking for "<devicehwid> followed by "0x80000403" before reaching "</vendor>". As shown on the ninth line (page 26) of the Appendix, that search is also successful. Next, the application loader 80 performs a text search of the file 101 (after the ninth line) looking for any other instance of "<devicehwid> followed by "0x80000403" before reaching "</vendor>". Here, three instances are found at the twelfth, fifteenth and eighteenth lines (page 26) of the Appendix. Then, the application loader 80 performs a text search of the file 101 looking for "version=" prior to the four instances of "<devicehwid>. As shown on the eighth, eleventh, fourteenth and seventeenth lines (page 26) of the Appendix, that search is also successful. Next, the application loader 80 reads the four version numbers as "3.6.0.38," "3.6.0.59," "3.6.0.73" and "3.6.0.83". With this information, the application loader 80 responsively selects the corresponding one of the application programs 84 of the central program store location 74 having the largest version number, which in this example is "3.6.0.83". Hence, in this example, version "3.6.0.83" has been approved by the corresponding vendor (e.g., VODAFONE (UK)) for the particular hardware identifier and has the highest version number of the four different approved software versions. Finally, the application loader 80 downloads that selected one of the application programs 84 (having version number 3.6.0.83) to the PC 75 and, then, to the handheld electronic device 76.

### Example 4

As was discussed above, the application loader 80 downloads the selected application program, such as 97 of Figure 3, over the communication cable 78 from the PC 75 to the wireless handheld electronic device 76. In turn, the device 76 loads the application program 97 in memory 108 and executes the same.

Figure 5 shows a flowchart 130 of the application loader 80 of Figure 3. The application loader 80 employ a "VendorID" and/or a "HardwareID" to determine the appropriate (i.e., specific vendor "approved") handheld electronic device software, such as application program 72 (Figure 3), to load onto a particular handheld electronic device, such as 76.

The application loader 80 employs logic to automatically load the appropriate vendor-approved handheld electronic device software for a particular handheld electronic device based on the VendorID and/or HardwareID of that device. The application loader 80 checks the local file 101 (or the remote file 86) of Figure 3 that effectively lists the acceptance information for given VendorIDs (i.e., corresponding to vendors, such as 102 of Figure 3). Based on the application programs 84 that are present in the central program store location 74, the received identifier 96 and the information in the local file 101, the application loader 80 loads the appropriate software without requiring the user or another entity (e.g., an information technology (IT) department) to have to manually manage a plurality of different software loads.

The VendorID (e.g., as internally assigned by the enterprise that sells, markets or distributes the handheld electronic devices, such as 76) is an assigned number that is included in a VSM (or branding sector) file (not shown) on the handheld electronic device 76 of Figure 3. The VendorID is checked by the application loader 80 against the local Vendor.xml file 101 that tracks which software has been accepted by which vendor, such as 102. In turn, the application loader 80 loads the appropriate software on the PC 75 and, then, on the handheld electronic device 76 based on this information.

The application loader 80 loads the appropriate handheld software on the associated handheld electronic device, such as 76, as authorized by the corresponding vendor, such as service provider 102. The application loader 80 (e.g., a handheld software sub-installer) is configured in two ways: (1) the HardwareID indicates which programs are technically compatible with particular handheld electronic devices; and (2) the VendorID indicates which programs have been accepted/approved by wireless service providers, such as 120, for deployment on handheld electronic devices connected to their wireless networks (and for which they are providing first-line technical support).

First, at 132, a user initiates execution (e.g., from a suitable user interface, such as display 150, of the PC 75 of Figure 3) of the application loader 80. Next, at 134, the application loader 80 connects to the handheld electronic device 76 and reads the VendorID and the HardwareID pair from the handheld electronic device, as was discussed, above, in connection with steps 110 and 112 of Figure 4. Then, at 136, it is determined if the VendorID was found on the handheld electronic device 76. For example, the VendorID 92 (e.g., a positive integer) is normally stored in the memory 108 (Figure 3) of the handheld electronic device 76 and is returned to the application loader 80 with the received identifier 96 (Figure 3). If, however, the handheld electronic device 76 is "unbranded" and, thus, is not associated with a particular vendor, then the VendorID 92 is set to a neutral, null or zero value.

Otherwise, if the VendorID is a positive integer, then execution resumes at 138, where the application loader 80 checks for the presence of the Vendor.xml file 86 in the disk sub-system 82 of the central program store location 74. If the Vendor.xml file 86 is found, then execution resumes at 140.

Next, at 140, it is determined if the specific VendorID is found (e.g., by performing a text search) in the local Vendor.xml file 101. If so, then one of the identifiers 88 in the file 101 matches the received identifier 96 of Figure 3. Then, execution resumes at 142, where it is determined if "approved" handheld software is present in the central program store location disk sub-system 82. This determination is made by employing any of Examples 1-3, above. Preferably, the HardwareID is also employed and the application loader 80 determines the highest version number of the software associated with the pair formed by the VendorID and the HardwareID. Based upon that version number, such as 20 of Figure 1, the corresponding one of the programs 12 of Figure 1 is identified and it is determined if that program is present in the central program store location disk sub-system 82. If so, then at 144, the application loader 80 downloads that "approved" handheld software to the PC 75 and, then, to the handheld electronic device 76.

If any of the tests at 136, 138 or 140 fail, then, at 146, the application loader 80 downloads to the handheld electronic device 76 the latest version of the handheld electronic device software that is present in the central program store location disk sub-system 82. For example, the disk sub-system 82 may include one or more binaries that correspond to particular HardwareID values. Hence, for example, associated with HardwareID 0x90000503, there may be one or more programs having corresponding version numbers. Here, the application loader 80 selects the program having the highest version number and downloads that program to the handheld electronic device 76.

If test 142 fails, which means that none of the programs 84 of Figure 3 corresponds to the received identifier 96, then, at 148, the application loader 80 responsively displays a "No System Software present" message on the display 150 of the PC 75 of Figure 3. In this example, if there is no handheld electronic device software corresponding to both of the VendorID and the HardwareID of the received identifier 96, then this message is displayed.

The application loader 80 uses the local Vendor.xml file 101 to determine which handheld software version can be loaded to the handheld electronic device 76. The application loader 80 applies the following rules: (1) if the handheld electronic device 76 is unbranded, as determined at 136, and, thus, includes no VSM file and no VendorID 92, or (2) if the central program store location Vendor.xml file 86 is not found at 138, or (3) if the local Vendor.xml file 101 does not contain the handheld electronic device's VendorID, as determined at 140, and as read from the handheld electronic device 76, then the application loader 80 selects and downloads, at 146, the handheld software with the highest version number that applies to the handheld electronic device 76. Otherwise, if the handheld electronic device's VendorID 92, as read from the handheld electronic device 76, is found in the local Vendor.xml file 101, then the application loader 80 selects and downloads the "approved" handheld software with the highest version number for that VendorID 92 that is installed on the central program store location disk sub-system 82 (Figure 3). Finally, if no "approved" handheld electronic device software is present, at 142, for that VendorID 92, then the application loader 80 displays the "No System Software present" message, at 148, and the downloading process is discontinued.

In addition to the application programs 84 of Figure 3, the central program store location disk sub-system 82 includes a plurality of programs 152 (*e.g.,* P1,P2,P3,P4 of Figure 5) that are associated with corresponding hardware identifiers 154 (*e.g.,* H1,H2,H3,H4) and corresponding version numbers 156 *(e.g.,* V1,V2,V3,V4). Also, one of the programs 152 (*e.g.,* P3) may be associated with more than one version number 156 (*e.g.,* V3,V3.1). Step 146 downloads one of the programs 152 associated with the corresponding one of the hardware identifiers 154 with the highest one of the version numbers 156 that applies to the particular handheld electronic device as defined by its corresponding one of the hardware identifiers 154.

### Example 5

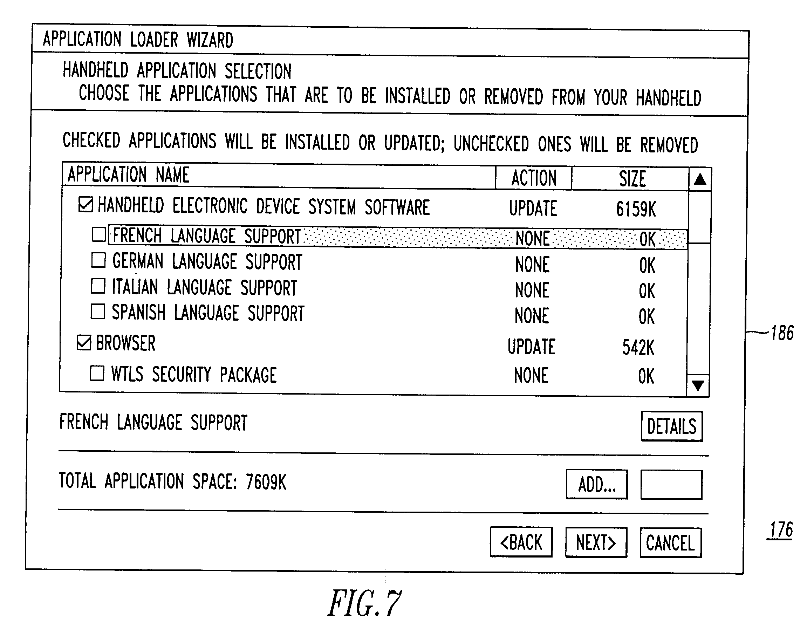

Figure 6 shows the update of a Vendor.xml file 86' of the central program store location 74, which file 86' is similar to the file 86 of Figure 3. The file 86' includes a plurality of identifiers 88', which include both VendorIDs 92' and HardwareIDs 94'. Each of the identifiers 88' (*e.g.,* VENDOR ID 1 and HARDWARE ID A) is associated with a corresponding one of the version numbers 20' (*e.g.,* VERSION X). In turn, each of the identifiers 88' *(e.g.,* VENDOR ID 1 and HARDWARE ID A) in the file 86' is associated, through the versions numbers 20', with a corresponding one of the programs 12' having that version number (*e.g.,* VERSION X). In turn, with new releases of application programs, such as program 158, the file 86' is updated to associate the corresponding one of the identifiers, such as 160, with the new program 158, which is different than the other programs 161, and which has a new version number 162 (*e.g.,* Version Z.2), which is different than the other version numbers 164. In turn, that application program 158, is stored in the central program store location disk sub-system 82.

### Example 6

The central program store location 74 of Figure 3 may include handheld model specific files, which are specific to a particular handheld electronic device, such as 76, or family of handheld electronic devices, such as the executable code for the handheld electronic device, and handheld electronic device specific documentation, such as a user's guide. The central program store location 74 may further include handheld model sensitive files, which are not necessarily handheld electronic device specific, but which may require updating when new handheld models become available.

The application loader 80 may provide a plurality of handheld electronic device sub-installers, in which each set of handheld model specific files is deployed in a dedicated handheld sub-installer, which is packaged as a single-file, self-extracting executable. Preferably, only one such installer is employed for each type of handheld electronic device. However, since different vendors may accept different versions of application programs and since maintenance updates are generally employed, there may be a plurality of different variants for any particular device type.

The handheld model neutral files may be packaged via an installer object (*e*.*g*., a Windows® installer merge module) and included in different handheld sub-installers. Through the use of versioning, these components can be shared by multiple sub-installers thus ensuring that only the latest version of a file is retained.

Hence, instead of one monolithic installer, with many variants, there may be a plurality of "component-based" installers, each of which contains only one principal deliverable.

### Example 7

Before loading a new application program to the handheld electronic device 76, the cable 78 of Figure 3 is connected to the serial (or USB) port (*e.g.,* COM port) 166 of the PC 75 and the handheld electronic device 76 is placed in a cradle 168. Also, the PC 75 is configured to communicate with the central program store location 74 through the communication interface 167 (*e.g.,* modem; DSL port; any suitable communication network interface) and the Internet 77. The user typically places the handheld electronic device 76 in the interface cradle 168 that is electrically connected to the PC 75 through a suitable form of local, dedicated communication, such as the serial cable 78 or an infrared/Bluetooth channel (not shown) or another suitable type of wireless communication channel (not shown). The application loader 80 executing on the PC 75 and other software 170 executing on the handheld electronic device 76 communicate through the local communication channel of the serial cable 78 to cause the PC 75 to download information, such as the selected program 97, for storage in the memory 108 of the handheld electronic device 76.

### Example 8

The application loader 80 of Figure 3 may be launched from another program (not shown) executing on the PC 75. For example, after opening that other program, the user places the handheld electronic device 76 in the cradle 168 and connects it to the PC 75 by the cable 78. The user then double-clicks on a suitable link 171 displayed by the display 150 of Figure 3. Then, a suitable window (not shown) is displayed, which advises the user to connect the handheld electronic device 76 to the PC 75 before loading new software.

Next, the user clicks "Next" (not shown) in the display window (not shown) to start the process of loading new software onto the handheld electronic device 76. For example, an "Initialization Progress" dialog box (not shown) appears on the PC display 150 to indicate that the application loader 80 is connecting to the handheld electronic device 76 and is reading the handheld electronic device's configuration, including the VendorID 92 and the HardwareID 94 of Figure 4. At the same time, the display 172 of the handheld electronic device 76 shows a message "Loader activity..." (not shown). Finally, the user waits until the downloading is completed and the dialog box on the PC display 150 disappears.

### Example 9

An example of the Vendor.xml file 86 of Figure 3 is shown in the Appendix. This file 86 is created as follows. There is a single protected file, Vendor.xml, that lists all the information required by the application loader 80 of Figure 3. The file 86 is preferably managed by the enterprise that sells, markets or distributes the handheld electronic devices, such as 76 of Figure 3. When a carrier, such as the wireless service provider 102, accepts software, the file 86 is updated to note that acceptance. In turn, the file 86 is included into the central program store location 74. The Vendor.xml file 86, which lets the application loader 80 know what software is approved, is an ever cumulative file that grows as carriers, such as 102, accept software.

### Example 10

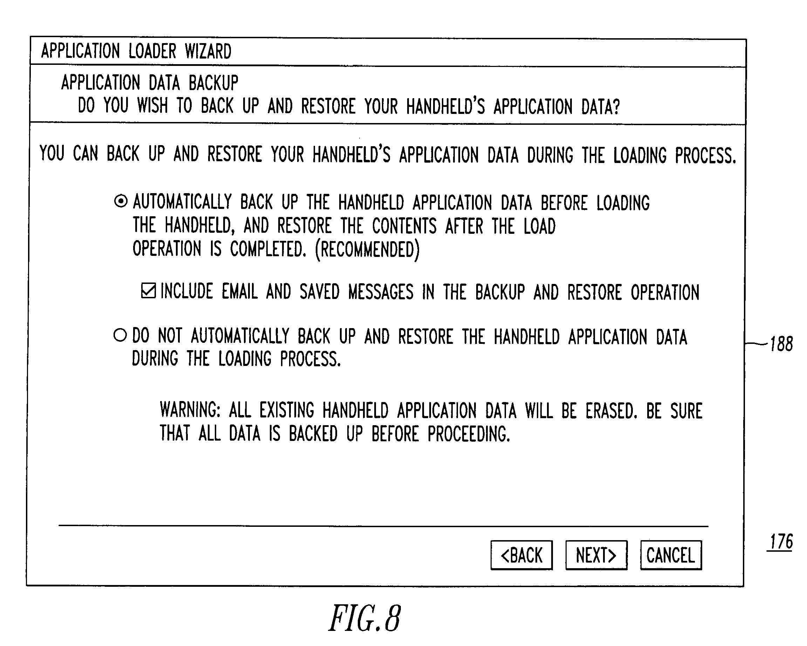

The program store location (e.g., the central program store location 74 of Figure 3) is provided where corporate approved handheld software can be installed and then pushed out via a communication network, such as the Internet 77, to the user base to upgrade their wireless handheld electronic devices, such as 76. This process can be relatively simple, such as the link 171 in an e-mail message 180 to the PC 75 (Figure 3), in order to activate, when selected, a tool/wizard 176 (Figures 7 and 8). This permits the PC 75 to complete the upgrade in an interactive fashion *(e.g.,* where the user can make decisions) or in an automated scripted fashion (*e.g.,* where the IT department, but not the user, can make decisions).

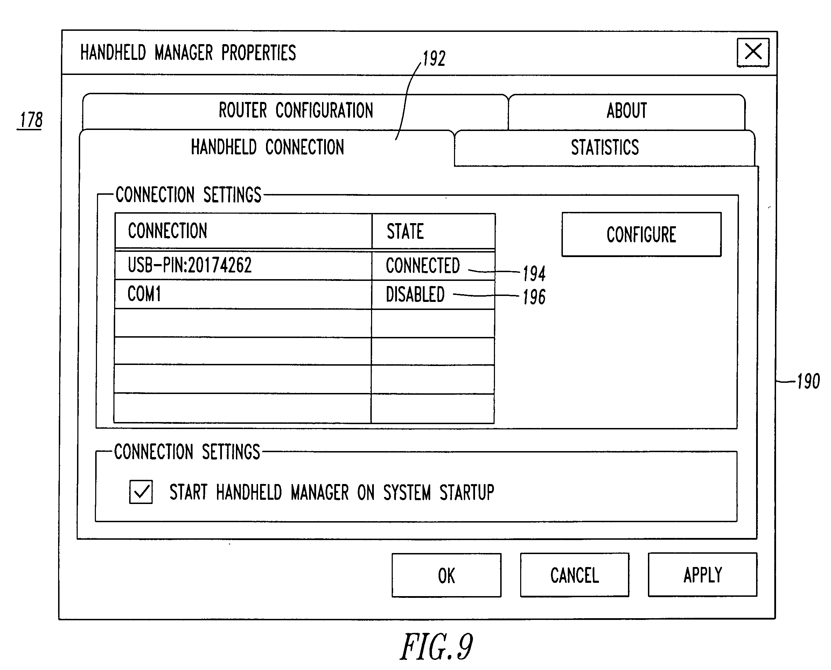

In this example, in order to send a handheld electronic device software upgrade to a user's personal computer, such as PC 75 (Figure 3), a Handheld Manager 178 (Figure 9) is installed thereon. The PC 75 employs a physical connection, such as the cable 78, to the handheld electronic device 76. An enterprise (not shown), which maintains the central program store location 74, sends each user the corresponding e-mail message 180 (Figure 3) including a suitable link, such as 171. As a non-limiting example, the link 171 may be a suitable UNC path to the location of a remote application loader/wizard, such as, for example:
\\<shared computer name>\Apploader\loader.exe.

When the user clicks this link 171, the wizard 176 (Figures 7 and 8) is executed on the user's PC 75 where it looks to the central program store location 74 for software upgrades to install. Preferably, the executed application loader 80 first caches the selected and downloaded upgrade software 97 on the PC 75 in case any communication network interruption might occur during the upgrade. The cached software 97 is stored locally on the PC 75 before it is downloaded to the wireless handheld electronic device 76.

### Example 11

As an alternative to the link 171 (Figure 3) of Example 10, the user may access a remote web site, such as 182 (Figure 2) from a host system, such as 45, in order to activate the tool/wizard 176 (Figures 7 and 8) at the host system 45. Again, this permits the host system 45 to complete the upgrade in an interactive fashion *(e.g.,* where the user can make decisions) or in an automated scripted fashion *(e.g.,* where the IT department, but not the user, can make decisions).

### Example 12

Alternatively, the process can be relatively advanced whereby the IT department (not shown) defines a software configuration for core wireless handheld electronic device software and then pushes such upgrades out wirelessly from an enterprise server (not shown).

For example, the IT administrator applies a "software configuration" to a handheld electronic device and selects a "wireless" delivery mode, in order that this be done over a wireless network. The user is then be prompted to initiate the upgrade (or to defer it for a period of time). When initiated, the new software is downloaded wirelessly to the handheld electronic device and the device is triggered to perform the upgrade. The decision process currently embodied in the application loader 80 is moved to a server-based component, which asks the handheld electronic device for its vendor ID and Hardware ID wirelessly, performs the same selection logic on the server against the same program store, and then transmits the program updates to the device wirelessly.

### Example 13

Referring to Figures 7 and 8, the IT department (not shown) may provide users with a basic tool to upgrade or load core wireless handheld electronic device software *(e.g.,* operating system; radio) of their target system 46 (Figure 2) or device 76 (Figure 3). For example, the lightweight application loader 80 (Figure 3) displays the tool/wizard 176 (Figures 7 and 8) and may be run from the central program store location 74 as specified by the IT department. The application loader 80 also employs the handheld manager 178 (Figure 9) that is installed on the user's PC 75, which runs the application loader 80 and handles the communication channel link with the device 76. The tool/wizard 176 provides an easy way for IT administrators to load core wireless handheld electronic device software without requiring a full desktop manager (not shown) to be installed on the user's PC 75.

The display 186 of Figure 7 permits the user to configure various aspects of the selected program 97 (Figure 3) before it is installed onto the device 76.

The display 188 of Figure 8 permits the user to backup application data of the device 76 before the selected program 97 (Figure 3) is downloaded to the device 76 from the PC 75.

The display 190 of Figure 9 shows the status of the connection 192 of the PC 75 to the device 76 (Figure 3). In this example, a USB port (not shown) of the device 76 is enabled 194 and the COM1 port 104 (Figure 3) is disabled 196. This display 190 also permits the user to select the handheld manager 178 for execution at startup of the PC 75.

### Example 14

When the IT administrator receives device software upgrades, those can be pushed to users by directing users to, for example, a shared network location, such as 44 (Figure 2), where the application loader 50 is located. The programs 54, such as core wireless handheld electronic device software, are also stored at the shared network location 44. The application loader 50, thus, employs the handheld manager 178 (Figure 9) installed on the host system 45, in order to handle the communications on the communication network 47 and the communication channel 48, and, thus, download the selected program 64 to the host system 45, and download the selected program 64 to the target system 46.

### Example 15

As an alternative to Example 13, the central program store location 74 may be specified by the wireless enterprise, such as 102 of Figure 3, or by the enterprise that markets the device 76.

### Example 16

Although the example application loaders 50 (Figure 2) and 80 (Figure 3) download and store the selected program as a stored program 64 (Figure 2) or 97 (Figure 3) before downloading the stored program from the host system 45 to the target system 46 or from the PC 75 to the device 76, the invention may, alternatively, start downloading the received program from the host system 45 (or PC 75) to the target system 46 (or device 76) substantially in parallel with the download from the program store location 44 (or 74) to the host system 45 (or PC 75).

### Example 17

Although a remote host system 45 (or remote PC 75) is shown, the invention is applicable to a local communication network between a local program store location and a local host system as part of a single computer or a single computer system.

While for clarity of disclosure reference has been made herein to the exemplary displays 150,172 for displaying displays, such as 186,188,190,198, or information, such as an error message, it will be appreciated that such displays or information may be stored, printed on hard copy, be computer modified, or be combined with other data. All such processing shall be deemed to fall within the terms "display" or "displaying" as employed herein.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended and any and all equivalents thereof.

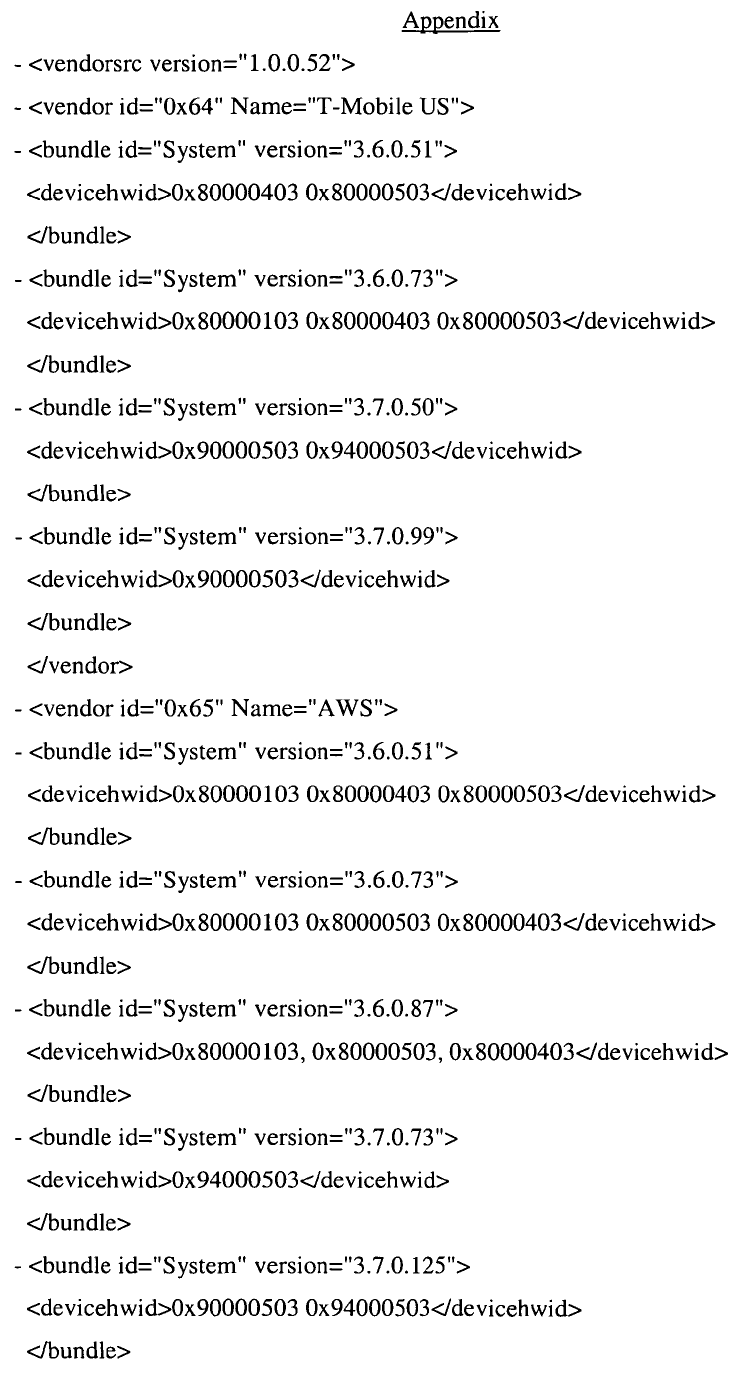

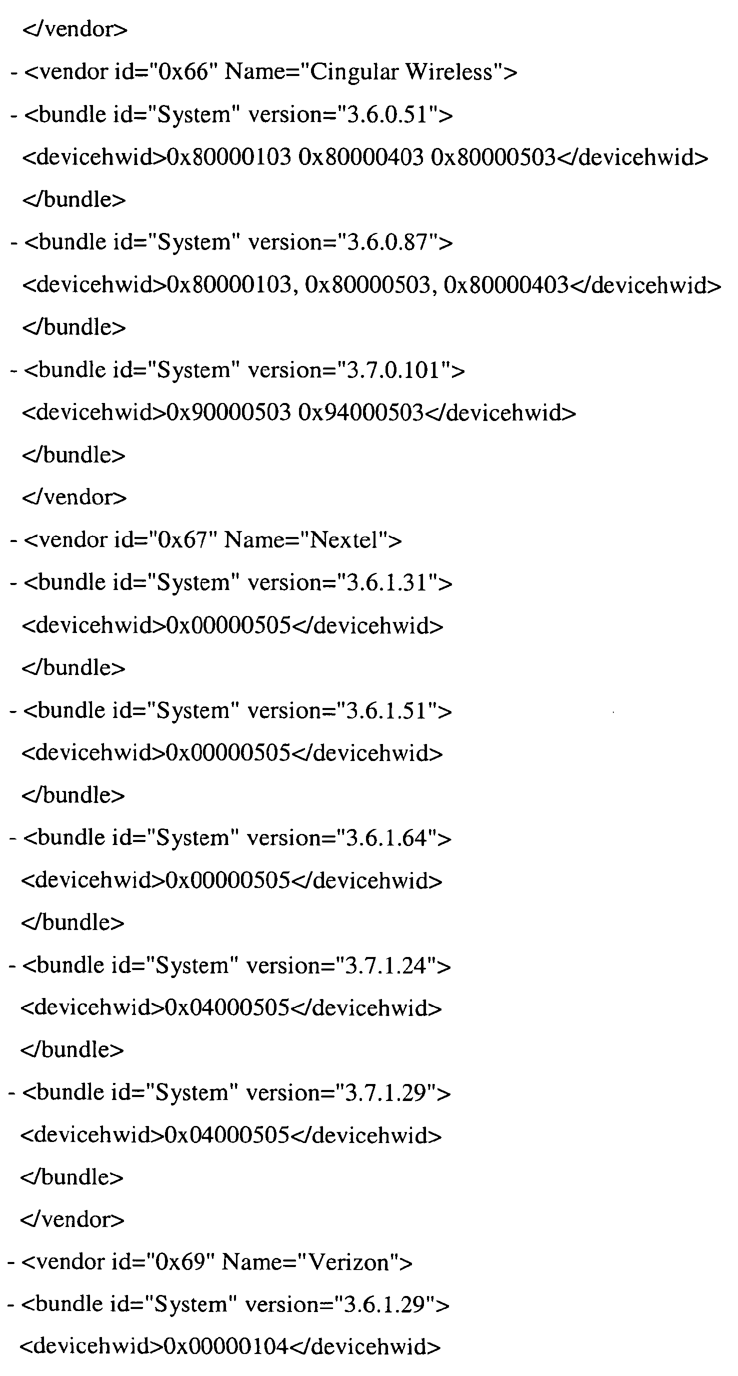

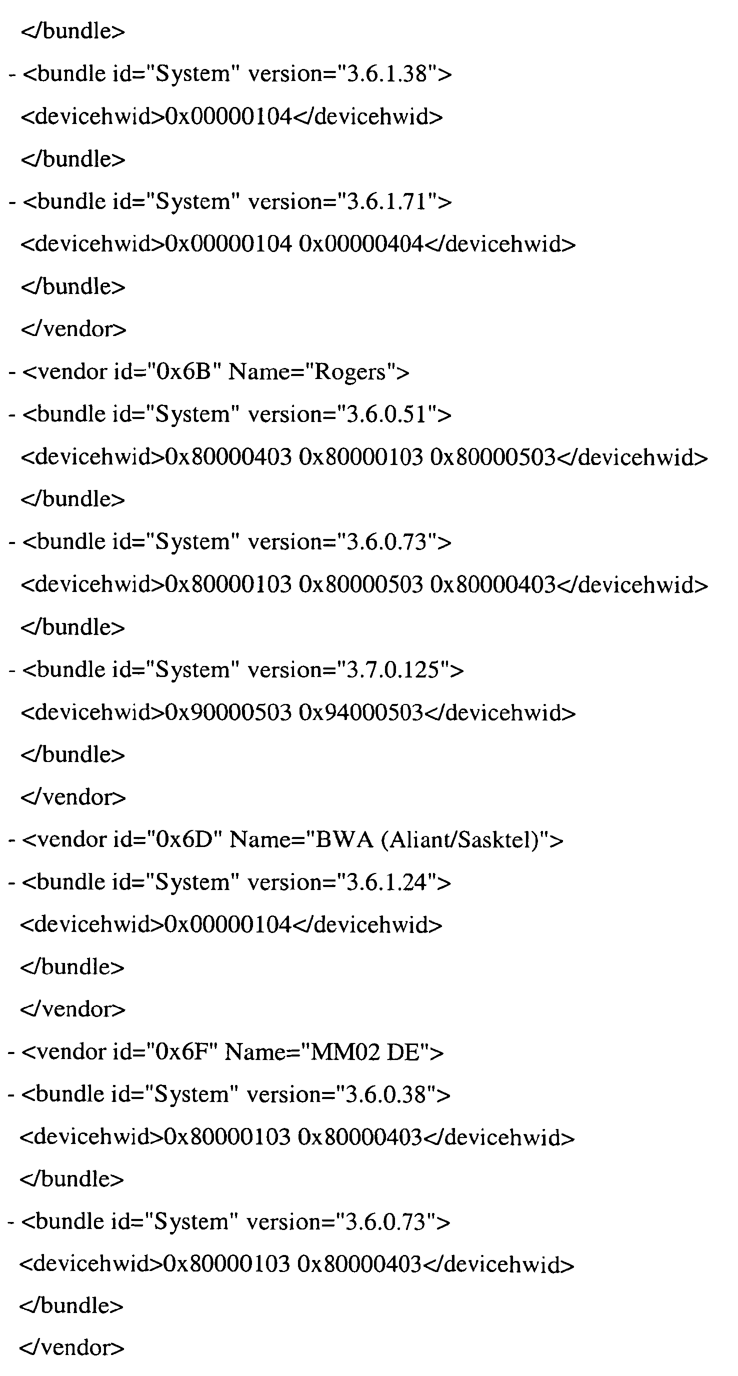

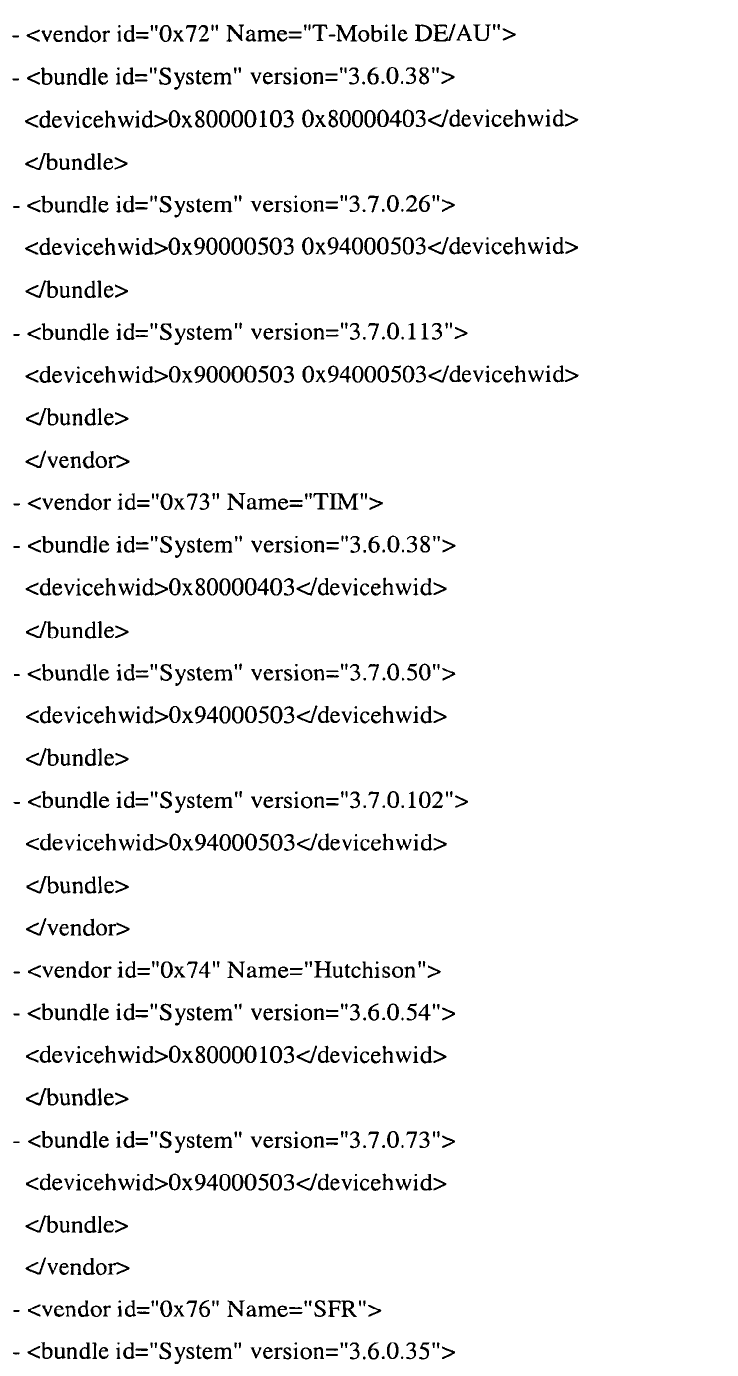

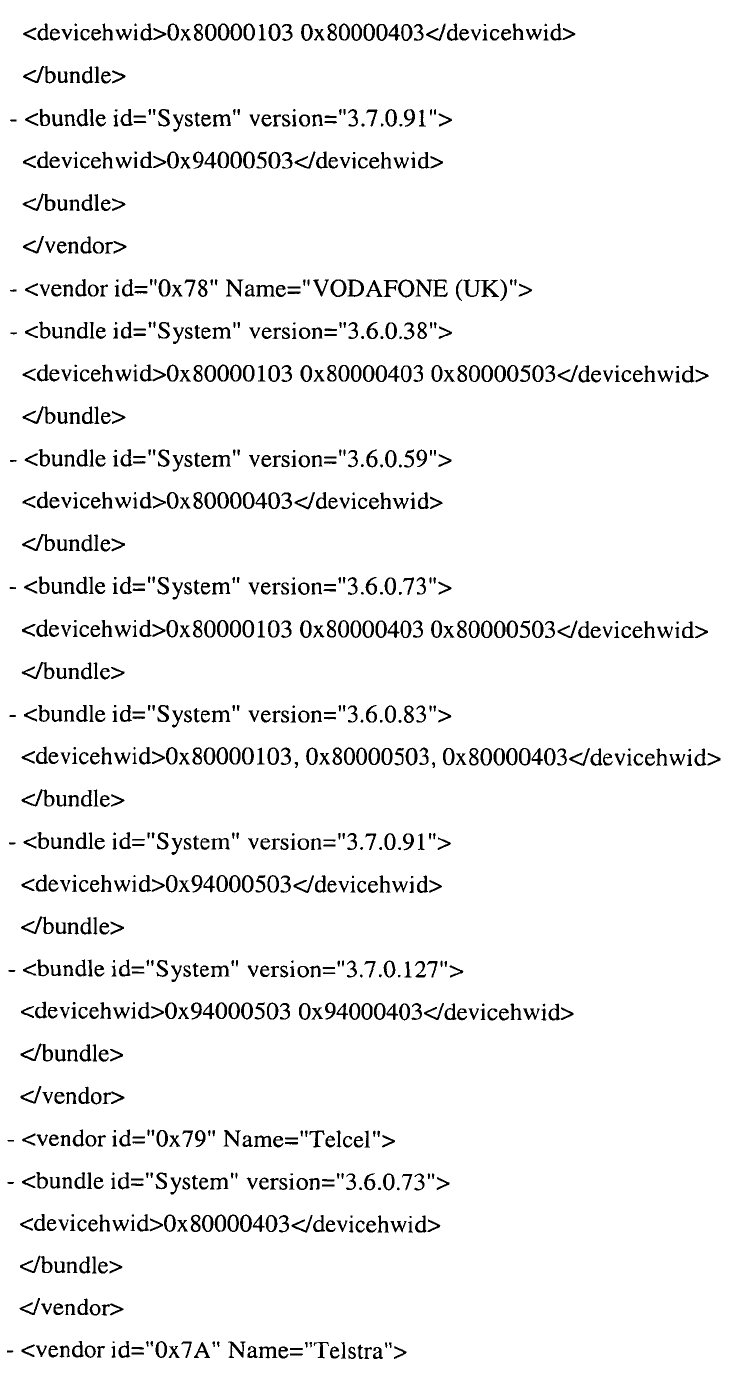

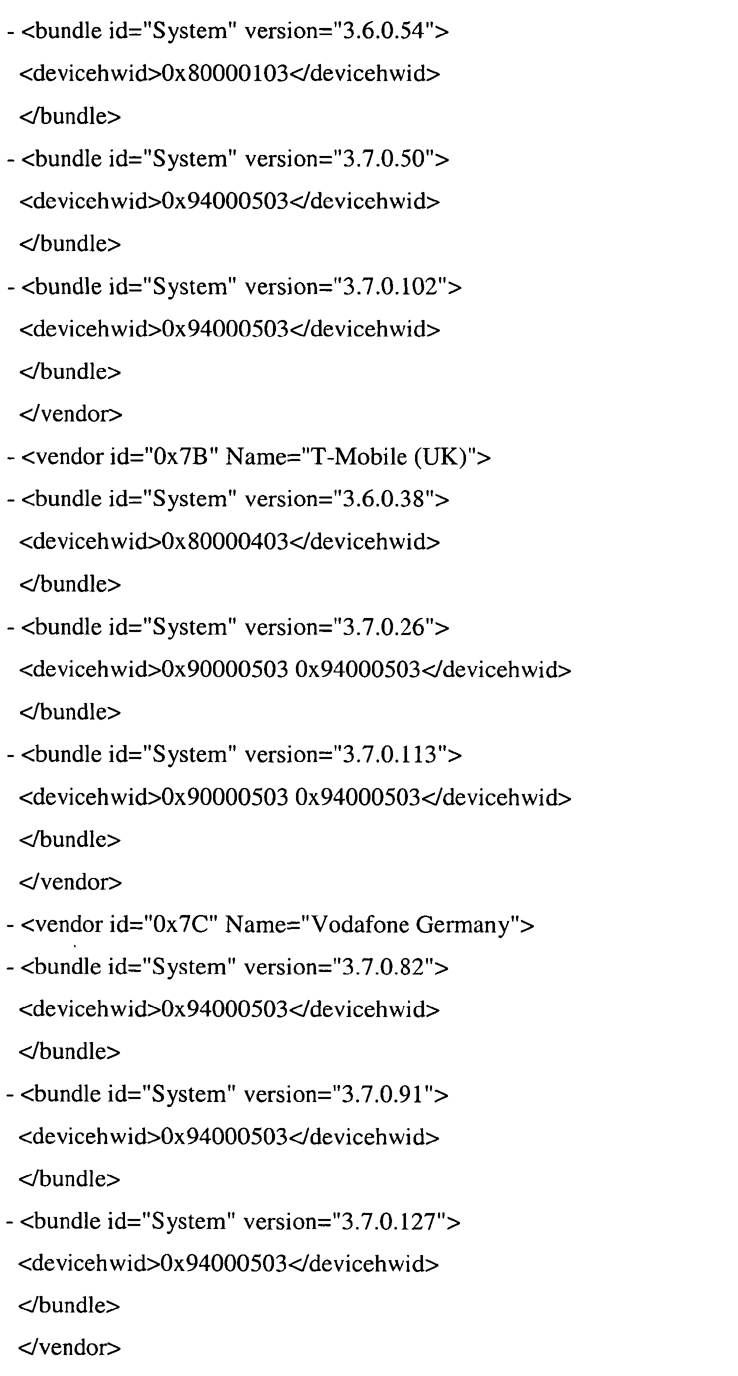

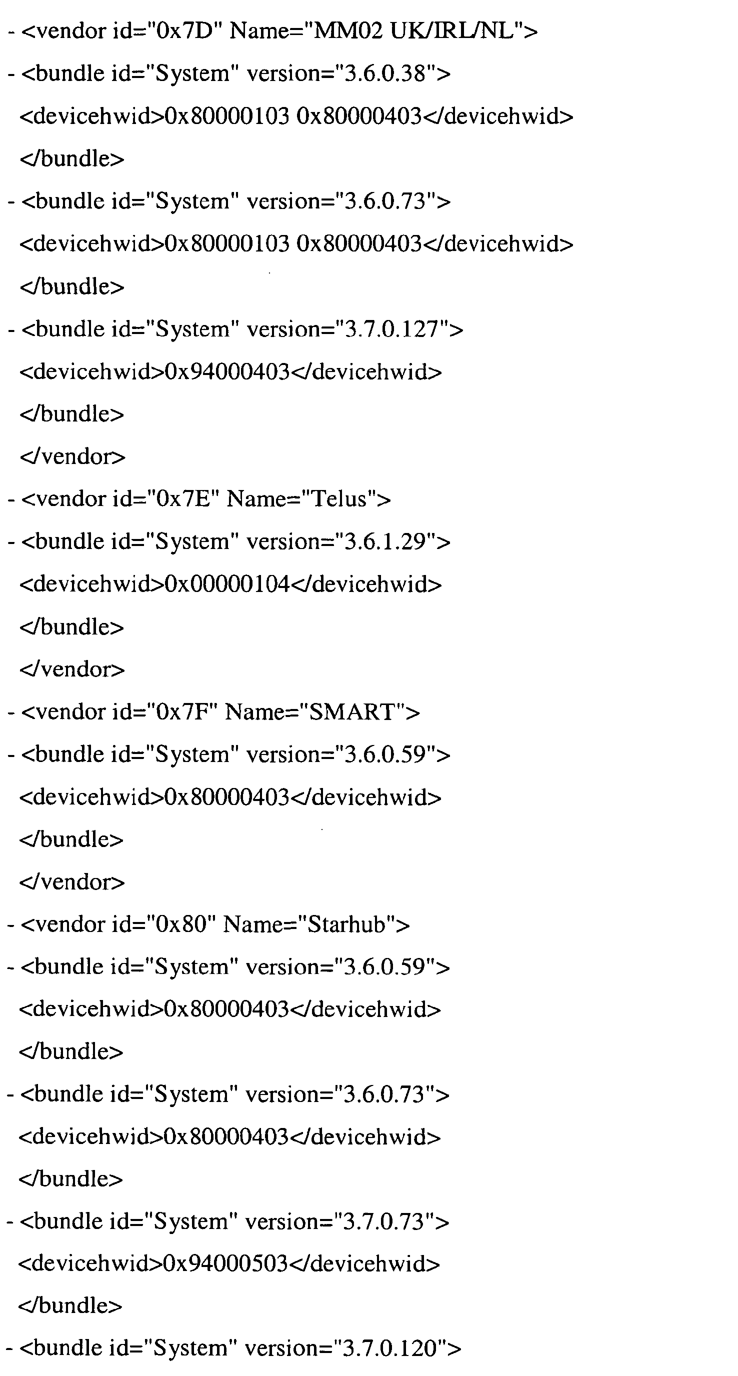

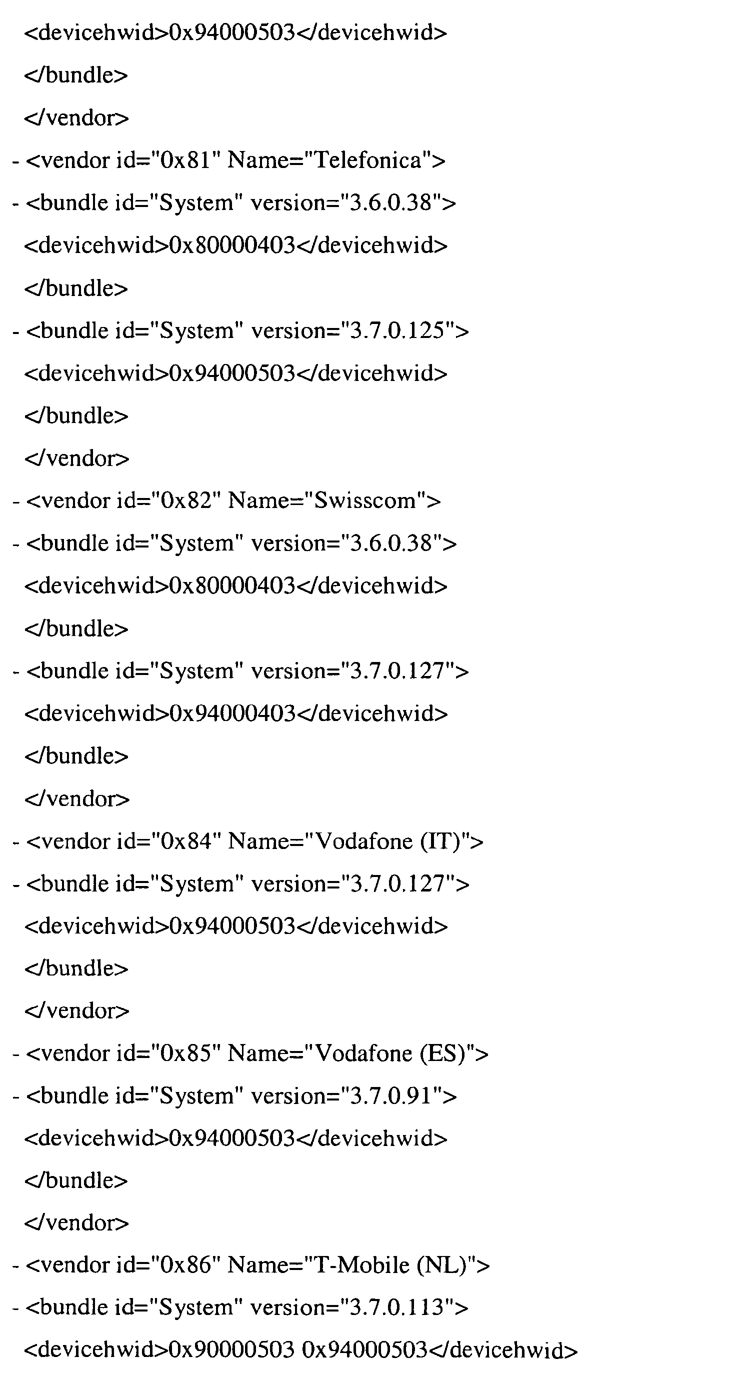

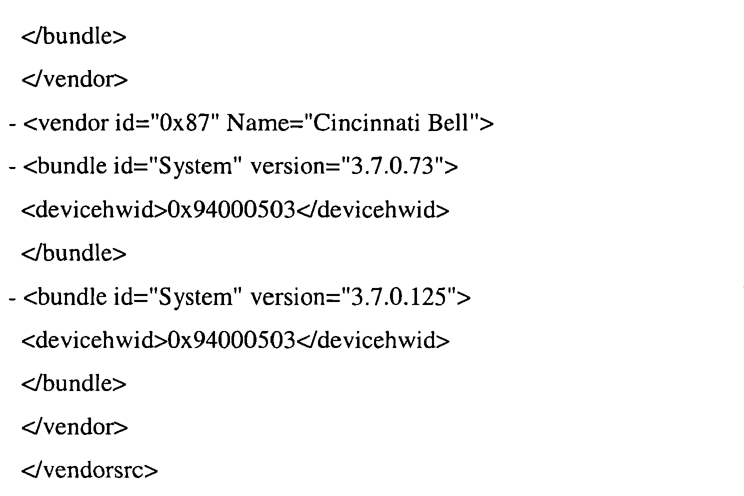

## Claims

1. A method of downloading a program from a program store location to a host system and to a target system, said method comprising:
storing a plurality of programs at the program store location;
storing a plurality of identifiers at the program store location, with each of at least some of said identifiers being associated with at least one of said programs;
connecting the program store location and the host system by a communication network;
connecting the host system and the target system by a communication channel;
sending an identifier from the target system to the host system over the communication channel;
receiving said identifier as a received identifier at the host system;
employing said identifiers and said received identifier to select one of said at least one of said programs for download as a selected program from the program store location to the host system; and
downloading said selected program from the host system to the target system.

2. The method of Claim 1 further comprising
employing as said programs a plurality of application programs at the program store location;
executing an application loader at the host system;
requesting said identifier from the target system by said application loader over the communication channel;
receiving said identifier as said received identifier at said application loader;
determining that said received identifier matches one of said identifiers and responsively selecting one of said application programs at the program store location as a selected application program;
downloading said selected application program from the program store location to the host system; and
downloading said selected application program from the host system to the target system.

3. The method of Claim 1 further comprising
employing with said identifier a vendor identifier;
sending said vendor identifier from the target system to the host system over the communication channel;
receiving said vendor identifier at the host system;
determining that said received vendor identifier matches one of said identifiers and responsively selecting said selected program;
storing a hardware identifier for the target system with said vendor identifier at the target system;
requesting said hardware identifier and said vendor identifier from the target system by the host system over the communication channel;
receiving said hardware identifier and said vendor identifier as said received identifier at the host system;
employing a plurality of vendor identifiers and associating one of said vendor identifiers and at least one hardware identifier with each of said programs at the program store location;
determining that said received vendor identifier matches one of the vendor identifiers; and
determining that said received hardware identifier matches said at least one hardware identifier associated with said one of the vendor identifiers and responsively selecting said selected program.

4. The method of Claim 1 further comprising
employing with said identifier a vendor identifier;
sending said vendor identifier from the target system to the host system over the communication channel;
receiving said vendor identifier at the host system;
determining that said received vendor identifier matches one of said identifiers and responsively selecting said selected program;
storing a hardware identifier for the target system with said vendor identifier at the target system;
storing a program associated with said hardware identifier at the program store location;
requesting said hardware identifier and said vendor identifier from the target system by the host system over the communication channel;
receiving said hardware identifier and said vendor identifier as said received identifier at the host system;
associating a vendor identifier and at least one hardware identifier with each of said programs at the program store location;
determining that said received vendor identifier has a predetermined value; and
selecting said selected program associated with said hardware identifier.

5. The method of Claim 1 further comprising
storing said identifiers in a file at the program store location;
associating a vendor with the target system;
employing with said identifier a vendor identifier, which identifies said vendor;
employing a hardware identifier associated with the target system;
storing a program associated with said hardware identifier at the program store location;
sending said vendor identifier and said hardware identifier from the target system to the host system over the communication channel;
receiving said vendor identifier and said hardware identifier as said received identifier at the host system; and
failing to find said file at the program store location and responsively downloading said program associated with said hardware identifier as said selected program over the communication network from the program store location to the host system.

6. The method of Claim 1 further comprising
associating a vendor with the target system;
employing with said identifier a vendor identifier, which identifies said vendor;
employing a hardware identifier associated with the target system;
storing a program associated with said hardware identifier at the program store location;
sending said vendor identifier and said hardware identifier from the target system to the host system over the communication channel;
receiving said vendor identifier and said hardware identifier as said received identifier at the host system; and
failing to find said received vendor identifier at the program store location and responsively downloading said program associated with said hardware identifier as said selected program over the communication network from the program store location to the host system.

7. The method of Claim 1 further comprising
associating a version number with each of said programs at the program store location;
employing with said identifier a vendor identifier;
storing said identifiers in a file at the program store location;
associating one of said identifiers in said file at the program store location with one of said programs having said version number for said one of said programs;
updating said file to associate said one of said identifiers with a new program, which is different than said programs, and which has a new version number, which is different than said version number; and
storing said new program at the program store location.

8. The method of Claim 1 further comprising
determining that one of said identifiers from the program store location matches said received identifier; and
determining that none of said programs at the program store location corresponds to said one of said identifiers and responsively displaying an error message at the host system.

9. A system for downloading a program, said system comprising:
a program store location including a memory storing a plurality of programs, said memory also storing a plurality of identifiers, with each of at least some of said identifiers being associated with at least one of said programs;
a host system;
a target system including an identifier;
a communication network connecting said program store location and said host system;
a communication channel connecting said host system and said target system; and
a loader routine adapted to execute at said host system, communicate with said program store location through the communication network, communicate with said target system through the communication channel, receive said identifier as a received identifier from said target system over the communication channel, employ said identifiers from said program store location and said received identifier to select one of said at least one of said programs for download as a selected program from said program store location to said host system, and download said selected program from said host system to said target system.

10. The system of Claim 9 wherein said programs are a plurality of application programs; and wherein said loader routine is an application loader routine adapted to receive said identifier as said received identifier from said target system over the communication channel, determine that said received identifier matches one of said identifiers from the program store location and responsively select one of said application programs for download as a selected application program from said program store location to said host system, and download said selected application program from said host system to said target system.

11. The system of Claim 9 wherein said identifier includes a vendor identifier; wherein said target system is adapted to send said vendor identifier to said host system over the communication channel; and wherein said loader routine is further adapted to receive said vendor identifier, determine that said received vendor identifier matches one of said identifiers from the program store location and responsively select one of said programs as said selected program.

12. The system of Claim 11 wherein said program store location associates a vendor identifier and at least one hardware identifier with each of said programs; wherein said identifier further includes a hardware identifier for said target system; and wherein said loader routine is further adapted to employ a plurality of vendor identifiers from the program store location, request said hardware identifier and said vendor identifier from said target system over the communication channel, receive said hardware identifier and said vendor identifier as said received identifier, determine that said received vendor identifier matches one of the vendor identifiers from the program store location, determine that said received hardware identifier matches said at least one hardware identifier associated with said one of the vendor identifiers, and responsively select said selected program.

13. The system of Claim 9 wherein the identifier of said target system includes a hardware identifier representing said target system and a vendor identifier representing a vendor associated with said target system.

14. The system of Claim 9 wherein said loader routine is an application loader that is activated at said host system responsive to a link in an e-mail message sent to said host system.

15. The system of Claim 9 wherein said program store location is a central program store location; and wherein said host system and said target system are remote from said central program store location.

16. The system of Claim 15 wherein said loader routine is an application loader that is activated at said host system responsive to a link of a web site associated with said central program store location.

17. The system of Claim 9 wherein said loader routine is further adapted to download and store said selected program as a stored program at said host system before downloading said stored program from said host system to said target system.

18. A method of enabling download of a program from a program store location for a destination system, said method comprising:
storing a plurality of programs at the program store location;
storing a plurality of identifiers at the program store location, with each of at least some of said identifiers being associated with at least one of said programs;
storing a program loader at the program store location;
adapting said program loader to execute at said destination system, communicate with said program store location through a communication network, receive an identifier as a received identifier from a target system, employ said identifiers from said program store location and said received identifier to select one of said at least one of said programs for download as a selected program from said program store location to said destination system, and download said selected program from said destination system to said target system; and
enabling communication of the program loader from the program store location to said destination system over said communication network.

19. The method of Claim 18 further comprising
sending a link in an e-mail message to said destination system; and
adapting said program loader for activation at said destination system responsive to said link.

20. The method of Claim 18 further comprising
employing a web site including a link associated with said program store location; and
adapting said program loader for activation at said destination system responsive to said link.
